# EUROPÄISCHE PATENTSCHRIFT

(11) **EP 4 016 206 B1**
(45) Veröffentlichungstag und Bekanntmachung des Hinweises auf die Patenterteilung: **30.08.2023**
(21) Anmeldenummer: 20214932.4
(22) Anmeldetag: 17.12.2020
(51) Int. Cl.: G05B 19/042

(54) **SENSORANORDNUNG, STEUERGERÄT, AUTOMATISIERUNGSSYSTEM UND VERFAHREN ZUM ÜBERMITTELN VON SIGNALEN GEMÄSS ZWEIER KOMMUNIKATIONSSTANDARDS**
SENSOR ARRANGEMENT, CONTROL DEVICE, AUTOMATION SYSTEM AND METHOD FOR TRANSMITTING SIGNALS ACCORDING TO TWO COMMUNICATION STANDARDS
AGENCEMENT DE CAPTEUR, APPAREIL DE COMMANDE, SYSTÈME D'AUTOMATISATION ET PROCÉDÉ DE TRANSMISSION DES SIGNAUX SELON DEUX NORMES DE COMMUNICATION

(43) Veröffentlichungstag der Anmeldung: 22.06.2022
(73) Patentinhaber: Baumer Electric AG, 8500 Frauenfeld (CH)
(72) Erfinder: Brändle, Daniel, 8500 Frauenfeld (CH); Zepf, Stephan, 78224 Singen (DE)
(74) Vertreter: Strauss, Steffen

(56) Entgegenhaltungen:
- EP-A1- 3 657 734
- WO-A1-2015/067767
- DE-A1-102018 128 305
- DE-U1-202011 004 742
- N/a: "Induktive Linearwegsensoren mit IO-Link-Technologie", Hans Turck GmbH & Co. KG, 28. Februar 2011 (2011-02-28), Seiten 1-29, XP055307910, Gefunden im Internet: URL:https://www.turck.de/attachment/d10182 1.pdf [gefunden am 2016-10-05]

## Beschreibung

Die vorliegende Erfindung betrifft eine Sensoranordnung mit einem Sensor, insbesondere einem schaltenden Sensor, beispielsweise, aber nicht ausschließlich einem Inkrementaldrehgeber und einer Signalschnittstelle zum Übermitteln von Signalen gemäß zweier Kommunikationsstandards. Die Erfindung betrifft außerdem ein Steuergerät für eine solche Sensoranordnung, ein Automatisierungssystem mit mindestens einer Sensoranordnung und mindestens einem Steuergerät sowie ein entsprechendes Verfahren.

In der Industrie und Wissenschaft werden Sensoren zum Messen von verschiedensten physikalischen Größen eingesetzt. Im Rahmen einer Primärfunktion geben diese Sensoren ihre Messwerte in Form von standardisierten, digitalen Signalen, beispielsweise als zeitliche Abfolge elektrischer Spannungspegel, an ein übergeordnetes System aus.

Zum Zweck einer Sensordiagnostik, -wartung, -parametrisierung, eines Firmware-Upgrades oder anderer ähnlicher Vorgänge kann es auch nötig sein, dass die Sensoren zumindest zeitweise als Sekundärfunktion anderweitige Daten ebenfalls in Form von standardisierten, digitalen Signalen, beispielsweise als zeitliche Abfolge elektrischer Spannungspegel, an das übergeordnete System ausgeben bzw. vom diesem empfangen können.

Die in der Industrie und Wissenschaft hierfür genutzten Kommunikationsstandards haben jeweils ihre Stärken und Schwächen. Ferner sind gewisse Kommunikationsstandards untereinander nicht kompatibel.

Die Druckschrift DE 10 2018 128 305 B4 offenbart ein Verfahren zur sensorseitigen Einstellung eines on einem Signaleingang einer übergeordneten Steuerungseinheit der Automatisierungstechnik erwarteten Signaltyps. Die Druckschrift beruht auf dem Gedanken dass, wenn eine IO-Link-Device mit dem IO-Link-Master verbunden ist, sie folgende Funktionalitäten durchzuführen vermag: Sensorseitig ein variables Signal zu generieren und aus dem zugehörigen Spannungssignal auf den von der Steuerungseinheit erwarteten Signaltyp zu schließen und den Signalausgang am Sensor automatisch einzustellen.

Aus dem Dokument DE 20 2011 004 742 U1 ist ein Sensor für die Automatisierungstechnik mit einer Steuer- und Auswerteeinheit bekannt, welcher auf dem Gedanken basiert, zwei Schnittstellen bereitzustellen, über die jeweils eine bidirektionale Kommunikation zwischen dem Sensor und Busssystemen möglich ist. Hierbei wird eine zweite serielle Schnittstellenfunktionalität umgeschaltet, wenn ein Schwellwertvergleich der Versorgungsspannung ein bestimmtes Ergebnis liefert und zusätzlich an dem zweiten Anschluss eine bestimmte Signalfolge vom zweiten Busssystem registriert wird. Das bestimmte Ergebnis bei zwei verschiedenen Schnittstellefunktionalitäten ist ein Überschreiten des Schwellwerts. Der Schwellwertvergleich bezieht sich auf die Versorgungsspannung und einen Schwellwert. Zusätzlich wird eine bestimmte Signalfolge vom zweiten Bussystem registriert, insbesondere eine Abfolge von High-Signalen.

Der vorliegenden Erfindung liegt deshalb die Aufgabe zugrunde, eine Möglichkeit zu schaffen, die es mit geringem elektrischen Aufwand sowie auf kosten-, material- und/oder platzsparende Weise erlaubt, für die eingangs genannten Primär- und Sekundärfunktionen jeweils einen idealen Kommunikationsstandard zu wählen, selbst wenn diese nicht unmittelbar miteinander kompatibel sind.

Diese Aufgabe wird erfindungsgemäß für die eingangs genannte Sensoranordnung gelöst, indem die Sensoranordnung gemäß Anspruch 1 ausgestaltet ist.

Der Begriff "*Signalschnittstelle"* bezeichnet hierbei eine I/O-Schnittstelle und der Begriff *"elektrische Logikpegel"* bezeichnet hierbei Hi-Lo-Spannungspegel, wie sie in der Digitaltechnik bzw. Signaltechnik üblich sind.

Die vorliegende Erfindung ist zum einen vorteilhaft, weil die Umschaltbarkeit der Sensoranordnung zwei separate Betriebszustände, d.h. den ersten Betriebszustand und den zweiten Betriebszustand ermöglicht, sodass die Sensoranordnung beispielsweise die eingangs genannten Primär- und Sekundärfunktionen erfüllen kann. Hierbei können abgesehen vom sogleich erläuterten Vorgang der Umschaltung in den einzelnen Betriebszuständen der erste Kommunikationsstandard bzw. der zweite Kommunikationsstandard getrennt vom jeweils anderen Kommunikationsstandard und somit ohne Kompatibilitätsprobleme zum Einsatz kommen.

Die Ausgestaltung der Sensoranordnung, das Umschaltsignal, welches beispielsweise von einem übergeordneten Steuergerät stammt, anhand einer elektrischen Spannung zu erkennen, erlaubt trotz des Umstandes, dass diese elektrische Spannung nicht dem ersten Kommunikationsstandard entspricht, eine Detektion des Umschaltsignals, während sich die Sensoranordnung im ersten Betriebszustand befindet. Dies wird in der nachfolgenden Beschreibung noch verdeutlicht.

Insgesamt wird durch die erfindungsgemäße Lösung eine Möglichkeit geschaffen, Signale gemäß zweier, untereinander nicht unmittelbar kompatibler Kommunikationsstandards, über eine und dieselbe Signalschnittstelle zu übermitteln. Dies wirkt sich kosten-, materialund/oder platzsparend auf die Sensoranordnung aus und bringt nur geringen elektrischen Aufwand mit sich, da keine unnötigen Hilfsschnittstellen zusätzlich an der Sensoranordnung vorgesehen werden müssen.

Selbstverständlich ist die erfindungsgemäße Lösung nicht auf Sensoranordnungen mit nur einer Signalschnittstelle beschränkt, sondern kann auch auf Sensoranordnungen angewandt werden, welche neben der Signalschnittstelle noch mindestens eine weitere Schnittstelle aufweisen. Hierbei dient die mindestens eine weitere Schnittstelle jedoch anderweitigen Funktionen bzw. ist nicht dafür vorgesehen, lediglich die eingangs genannten Sekundärfunktionen zu erfüllen ohne dabei auch der eingangs genannten Primärfunktion zu dienen.

Die erfindungsgemäße Lösung kann durch verschiedene, jeweils für sich vorteilhafte und beliebig miteinander kombinierbare Ausgestaltungen weiter verbessert werden. Auf diese Ausgestaltungsformen und die mit ihnen verbundenen Vorteile ist im Folgenden eingegangen. Die in Bezug auf die Sensoranordnung, das Steuergerät sowie das Automatisierungssystem beschriebenen Vorteile gelten ebenso für das erfindungsgemäße Verfahren und umgekehrt.

Gemäß einer ersten Ausgestaltung der erfindungsgemäßen Sensoranordnung kann der erste Kommunikationsstandard ein Kommunikationsstandard sein, dessen elektrische Logikpegel zugunsten einer hochfrequenten Signalübertragung möglichst niedrig sind. Vor allem können die elektrischen Logikpegel des ersten Kombinationsstandards kleiner als der Schwellenwert des zweiten Kommunikationsstandards sein. Beispielseite können die elektrischen Logikpegel des ersten Kommunikationsstandards Werte zwischen 0V und 5V +/- 0,4 V oder zwischen 0V und 3,3V +/- 0,4 V annehmen. Insbesondere kann es sich beim ersten Kommunikationsstandard um die Norm EIA-422 handeln. Diese Norm eignet sich durch ihre vergleichsweise niedrigen elektrischen Logikpegel für eine hochfrequente Signalübertragung und erweitert somit die Anwendbarkeit der erfindungsgemäßen Sensoranordnung auf Einsatzgebiete mit Bedarf einer hochfrequenten Signalübertragung.

Anwendungen, bei denen hochfrequente Messwerte ausgegeben werden, und für welche die vorliegende Erfindung vorteilhaft ist, sind zum Beispiel Drehgeber, die hohe Drehzahlen und/oder schnell veränderliche Winkelstellungen erfassen. Entsprechend kann der Sensor ein Drehgeber sein. Ferner kann der Sensor ein Inkrementalgeber, insbesondere ein Inkrementaldrehgeber sein. Alternativ kann der Sensor auch ein Absolutwertgeber sein.

Beim als Drehgeber ausgestalteten Sensor kann es sich um einen digitalen Drehgeber oder einen analogen Drehgeber, dessen Logikpegel durch periodische Sinus- und/oder Kosinusfunktionen wiedergegeben werden, handeln. Die Signalschnittstelle kann im ersten Betriebszustand ausgestaltet sein, das Signal einer A-Spur, B-Spur, U-Spur, V-Spur, W-Spur oder eines Nullimpulses auszugeben.

Um die Übertragung der entsprechend hochfrequenten Signale zu bewerkstelligen, bietet es sich, wie bereits erwähnt, für die Primärfunktion an, einen Kommunikationsstandard, der vergleichsweise niedrige Spannungspegel nutzt, einzusetzen. Im Rahmen der Sekundärfunktion, welche keiner Übertragung von hochfrequenten Signalen bedarf, kann ein Kommunikationsstandard mit vergleichsweise hohen Spannungspegeln genutzt werden.

Entsprechend kann der zweite Kommunikationsstandard ein Kommunikationsstandard sein, dessen Schwellenwert größer ist als sämtliche elektrische Logikpegel des ersten Kommunikationsstandards. Beispielsweise kann der Schwellenwert des zweiten Kommunikationsstandard 8 V betragen. Insbesondere kann es sich beim zweiten Kommunikationsstandard um die Norm IEC 61131-9 handeln, welche auch unter dem Markennamen *"10-Link"* bzw. der Bezeichnung "*SDCI (Single-drop digital communication interface for small sensors and actuators*)" bekannt ist. Der Begriff *"IO-Link-Standard"* soll sich im Folgenden auf die Norm IEC 61131-9 beziehen. Der IO-Link-Standard ist ein weit verbreiteter Kommunikationsstandard, dessen Anwendung es der erfindungsgemäßen Sensoranordnung erlaubt, in breiten Teilen der Industrie und Wissenschaft eingesetzt zu werden.

Beim Umschaltsignal kann es sich um einen sogenannten *"Master Wake-Up"* gemäß IO-Link-Standard handeln. Der Master Wake-Up stellt hierbei einen Umschaltbefehl dar, der von einem übergeordneten Kommunikationsteilnehmer (z.B. einem Steuergerät) an einen untergeordneten Kommunikationsteilnehmer (z.B. einen Sensor) gesendet wird, sobald Bedarf für eine Kommunikation nach IO-Link-Standard besteht (z.B. Diagnostizierung, Wartung, Parametrierung, Firmware Upgrade o.ä.). Im IO-Link-Standard ist vorgesehen, dass der Master Wake-Up abhängig vom Sensorausgangssignal zum Zeitpunkt des Umschaltbefehls als ein elektrischer Stromimpuls ausgesendet wird, der das momentane Sensorausgangssignal invertiert. Das heisst, falls der untergeordnete Kommunikationsteilnehmer an seiner Schnittstelle momentan einen Lo-Pegel ausgibt, forciert der übergeordnete Kommunikationsteilnehmer als Master Wake-Up an der Schnittstelle einen Hi-Pegel und umgekehrt.

Solange diese Inversion gewährleistet ist, kann der untergeordnete Kommunikationsteilnehmer den Master Wake-Up über eine Messung eines Kurzschlussstroms, welcher an der Schnittstelle fließt, erkennen. Der Kurzschlussstrom fließt hierbei immer, wenn ein sensorseitiger Hi-Pegel auf einen steuergerätseitigen Lo-Pegel trifft bzw. ein sensorseitiger Lo-Pegel auf einen steuergerätseitigen Hi-Pegel trifft.

Bei der Unterscheidung ob der untergeordnete Kommunikationsteilnehmer momentan einen Hi-Pegel oder einen Lo-Pegel ausgibt, wird vom übergeordneten Kommunikationsteilnehmer gemäß IO-Link-Standard ein Schwellenwert von 8 V angewandt. Das heisst insbesondere, dass alle Spannungspegel unter 8V als Lo-Pegel aufgefasst werden.

Hierdurch ergibt sich eine Einschränkung des Detektionsvermögens der soeben beschriebenen Messung des Kurzschlussstroms und folglich eine Inkompatibilität zwischen dem IO-Link-Standard und sämtlichen Kommunikationsstandards, deren Logikpegel unterhalb des Schwellenwerts von 8V liegen. Insbesondere ist der IO-Link-Standard nicht ohne Weiteres mit der Norm EIA-422 kompatibel, da sowohl Hi-Pegel (=5V) als auch Lo-Pegel (=0V) gemäß der Norm EIA-422 vom übergeordneten Kommunikationsteilnehmer als Lo-Pegel aufgefasst werden, zumal sie beide unter dem Schwellenwert des IO-Link-Standards von 8 V liegen.

Falls nun im Rahmen des Master Wake-Up ein sensorseitiger Hi-Pegel auf einen steuergerätseitigen Hi-Pegel treffen sollte, wie es bei einer Kombination aus der Norm EIA-422 mit dem IO-Link-Standard nicht auszuschließen ist, fließt kein Kurzschlussstrom, sodass der Master Wake-Up unter Umständen mit der Messung des Kurzschlussstroms nicht ordnungsgemäß erkannt wird. Dieses Risiko wird vorteilhafterweise durch die erfindungsgemäße Lösung behoben, da die Sensoranordnung ausgestaltet ist, das Umschaltsignal nicht in erster Linie anhand des Kurzschlussstroms, sondern anhand der an der Sensoranordnung anliegenden elektrischen Spannung zu erkennen.

Gemäß einer weiteren möglichen Ausführungsform kann die Sensoranordnung ausgestaltet sein, das Umschaltsignal anhand einer an der Signalschnittstelle anliegenden elektrischen Spannung zu erkennen. Insbesondere kann die Sensoranordnung ausgestaltet sein, das Umschaltsignal anhand einer Messung der an der Signalschnittstelle anliegenden elektrischen Spannung zu erkennen. Die Spannungsmessung stellt hierbei eine leicht umsetzbare Maßnahme zum Erkennen des Umschaltsignals anhand der an der Signalschnittstelle anliegenden elektrischen Spannung dar.

Selbstverständlich kann die Sensoranordnung aus Redundanzgründen auch ausgestaltet sein, neben der Messung der an der Signalschnittstelle anliegenden elektrischen Spannung auch eine Messung des Kurzschlussstroms in der Sensoranordnung durchzuführen.

Erfindungsgemäß umfasst die Sensoranordnung ein Leitungstreibergerät zur Verstärkung der Sensorausgangssignale. Durch diese Signalverstärkung ergibt sich eine bessere Übertragungsqualität für die Sensorausgangssignale.

Ferner umfasst die Sensoranordnung ein Spannungsversorgungsgerät zum Speisen des Leitungstreibergeräts mit einer Versorgungsspannung. Optional kann das Spannungsversorgungsgerät ausgestaltet sein, die Versorgungspannung abhängig vom Betriebszustand einzustellen. Das Spannungsversorgungsgerät erlaubt es somit, Vorgaben hinsichtlich der Versorgungspannung aus dem ersten Kommunikationsstandard und dem zweiten Kommunikationsstandard zu erfüllen. Beispielsweise kann die Versorgungspannung im ersten Betriebszustand an die Logikpegel des ersten Kommunikationsstandards und/oder im zweiten Betriebszustand an die Logikpegel des zweiten Kommunikationsstandards durch das Spannungsversorgungsgerät angepasst werden.

Die Sensoranordnung umfasst einen Spannungswandler, vorzugsweise einen Gleichspannungswandler, wobei der Spannungswandler nach Empfang des Umschaltsignals die Versorgungspannung des ersten Betriebszustands in die Versorgungsspannung des zweiten Betriebszustands umwandelt. Der Spannungswandler kann in einem Schaltkreis des Leitungstreibergeräts integriert sein. Alternativ kann der Spannungswandler Teil des Spannungsversorgungsgeräts sein.

Optional kann der Spannungswandler ausgestaltet sein, die Versorgungspannung abhängig vom Betriebszustand einzustellen.

Erfindungsgemäß umfasst die Sensoranordnung eine Überwachungseinheit zum Überwachen der an der Sensoranordnung anliegenden elektrischen Spannung. Vorzugweise ist die Überwachungseinheit als Spannungsmesser oder Spannungskomparator ausgestaltet, die Versorgungspannung des Spannungsversorgungsgerätes mit der an der Signalschnittstelle anliegenden elektrischen Spannung zu vergleichen. Dieser Vergleich kann wahlweise kontinuierlich oder periodisch erfolgen. Erfindungsgemäß ist die Überwachungseinheit ausgestaltet, das Umschaltsignal zu erkennen, sobald die an der Signalschnittstelle anliegende elektrische Spannung die Versorgungsspannung für eine vordefinierte Zeitdauer überstiegen hat. Der Wert für die vordefinierte Zeitdauer kann hierbei beispielsweise dem zweiten Kommunikationsstandard entstammen und in der Überwachungseinheit nichtflüchtig gespeichert sein.

Da im ersten Betriebszustand die Höhe der Versorgungsspannung gemäß dem ersten Kommunikationsstandard das theoretische Maximum für die sensorseitig erreichbare elektrische Spannung an der Signalschnittstelle darstellt, ist das Übersteigen der Versorgungsspannung durch die an der Signalschnittstelle anliegende elektrische Spannung ein eindeutiger Indikator dafür, dass ein elektrisches Signal, welches nicht dem ersten Kommunikationsstandard entspricht, die Signalschnittstelle von außen erreicht hat. Insbesondere ist das Übersteigen also ein Indikator für den Empfang des Umschaltsignals, da dies das einzige, im ersten Betriebszustand von der Sensoranordnung erwartete, elektrische Signal ist, welches nicht dem ersten Kommunikationsstandard entspricht. Beispielsweise kann das Übersteigen also als Indikator dafür verstanden werden, dass durch das übergeordnete Steuergerät ein Hi-Pegel als Master Wake-Up forciert wird.

Alternativ kann die Überwachungseinheit ausgestaltet sein, die an der Schnittstelle anliegende elektrische Spannung mit einem vordefinierten, konstanten Referenzwert zu vergleichen. Der Referenzwert kann hierbei einem Richtwert für die Versorgungsspannung entsprechen, dem ersten Kommunikationsstandard entnommen und in der Überwachungseinheit nichtflüchtig gespeichert sein.

Die Überwachungseinheit kann so ausgestaltet sein, dass sie nach einem Erkennen des Umschaltsignals ein Schaltelement der Sensoranordnung betätigt bzw. über einen Mikroprozessor und/oder Mikrokontroller der Sensoranordnung eine Betätigung des Schaltelements bewirkt, wodurch ein Wechsel vom ersten Betriebszustand in den zweiten Betriebszustand erfolgt. Insbesondere kann im zweiten Betriebszustand das Leitungstreibergerät hochohmig geschaltet werden. Somit wird sichergestellt, dass der interne Signalfluss der Sensoranordnung an den zweiten Betriebszustand angepasst wird.

Gemäß einer platzsparenden Ausführungsform kann die Überwachungseinheit im Schaltkreis des Leitungstreibergeräts integriert sein. Insbesondere kann das Leitungstreibergerät eine Anwendungsspezifische integrierte Schaltung umfassend die Überwachungseinheit aufweisen.

Alternativ kann die Überwachungseinheit als ein externer Schaltkreis vorliegen, sodass eine Nachrüstung von bereits gebauten bzw. installierten Sensoranordnungen mit der Überwachungseinheit möglich ist.

Optional kann die Überwachungseinheit eine Filterfunktion oder eine Filterkomponente mit einer vordefinierten Zeitkonstante umfassen, welche kurzzeitige Überspannungsspitzen, die im Rahmen des ordnungsgemäßen Schaltbetriebs von schaltenden Sensoren üblich sind, herausfiltert bzw. unterdrückt. Die vordefinierte Zeitkonstante sollte die oben genannten vordefinierte Zeitdauer nicht überschreiten. Ferner sollte die Zeitdauer um die Zeitkonstante korrigiert werden.

Gemäß einer weiteren Ausführungsform kann die Sensoranordnung als Überspannungsschutzeinrichtung eine Diode, vorzugsweise eine Schottky-Diode umfassen, welche zwischen der Signalschnittstelle und dem Spannungswandler angeordnet ist. Insbesondere kann die Diode in Sperrrichtung zur Signalschnittstelle und in Durchlassrichtung zum Spannungswandler weisen. Somit schützt die Diode die Sensoranordnung verlässlich vor einer Überspannung, die durch das Umschaltsignal hervorgerufen werden könnte. Die Nutzung einer Schottky-Diode ist auf Grund des schnellen Reaktionsvermögens und der geringen Vorwärtsspannung der Schottky-Diode besonders vorteilhaft.

Alternativ zum Einbau einer Überspannungsschutzeinrichtung können die Bauteile der Sensoranordnung mit einer entsprechenden elektrischen Belastbarkeit ausgestaltet sein, sodass wahlweise auf eine Überspannungsschutzeinrichtung verzichtet werden kann.

Um im zweiten Betriebszustand eine bidirektionale Kommunikation zu ermöglichen, kann die Sensoranordnung ausgestaltet sein, im zweiten Betriebszustand über die Signalschnittstelle Kommunikationssignale mit Logikpegeln gemäß dem zweiten Kommunikationsstandard auch auszugeben. Somit kann beispielsweise eine Quittierung des Umschaltsignals erfolgen oder es können zum Zweck einer Sensordiagnostik relevante Daten an das übergeordnete Steuergerät übermittelt werden. Für die Dauer einer solchen Ausgabe kann das Leitungstreibergerät zeitweise niederohmig geschaltet werden.

Alternativ kann die Signalschnittstelle im zweiten Betriebszustand auch als reine Eingabeschnittstelle betrieben werden. Ferner kann die Signalschnittstelle im ersten Betriebszustand bis auf den Empfang des Umschaltsignals als reine Ausgabeschnittstelle betrieben werden.

Die eingangs zugrunde gelegte Aufgabe kann ebenfalls durch ein Steuergerät gemäß Anspruch 7 gelöst werden.

Der Begriff *"Kommunikationsschnittstelle"* bezeichnet hierbei ebenfalls eine I/O-Schnittstelle, wie sie in der Digitaltechnik bzw. Signaltechnik üblich ist.

Gemäß der in Bezug auf die Sensoranordnung bereits beschriebenen Funktionsweise und Vorteile ermöglicht das erfindungsgemäße Steuergerät vorteilhafterweise eine Aufnahme der Sensorausgangssignale sowie nach Bedarf eine Veranlassung und Durchführung von Diagnostizierung, Wartung, Parametrierung, Firmware Upgrade o.ä an der Sensoranordnung über ein und dieselbe Kommunikationsschnittstelle, sodass auch hier Kosten, Material und/oder Platz gespart werden können.

Je nach Anwendung können die Sensorausgangssignale unmittelbar im Steuergerät verarbeitet werden und/oder zwecks Verarbeitung an ein dem Steuergerät übergeordnetes Verarbeitungsgerät des Automatisierungssystems weitergeleitet werden. Die Verarbeitung kann hierbei eine Auswertung und/oder Speicherung der Sensorausgangssignale umfassen.

Gemäß einer möglichen Ausführungsform kann das Steuergerät ausgestaltet sein, das Umschaltsignal für eine vordefinierte Ausgabezeit lang auszugeben, wobei der Wert für die vordefinierte Ausgabezeit aus dem zweiten Kommunikationsstandard entstammen und mit dem Wert der oben erwähnten vordefinierten Zeitdauer übereinstimmen kann. Ferner kann das Steuergerät ausgestaltet sein, nach der Ausgabe des Umschaltsignals für eine vordefinierte Wartezeit zu warten, bevor die Ausgabe der Kommunikationssignale erfolgt, wobei der Wert für die vordefinierte Wartezeit aus dem zweiten Kommunikationsstandard entstammen kann. Alternativ oder zusätzlich kann das Steuergerät ausgestaltet sein, nach der Ausgabe des Umschaltsignals mit einer Ausgabe der Kommunikationssignale so lange zu warten, bis eine Quittierung des Umschaltsignals durch die Sensoranordnung erfolgt. Außerdem kann das Steuergerät ausgestaltet sein, ein erneutes Umschaltsignal auszugeben, falls innerhalb einer vordefinierten Quittierzeit keine Quittierung des vorangegangenen Umschaltsignals erfolgt sein sollte. Auf diese Weise wird sichergestellt, dass die vom Steuergerät ausgegebenen Umschalt- und Kommunikationssignale ordnungsgemäß von der Sensoranordnung empfangen werden können.

Vorzugsweise kann das Steuergerät ausgestaltet sein, auch Kommunikationssignale mit elektrischen Logikregeln gemäß dem zweiten Kommunikationsstandard von der Sensoranordnung zu empfangen

Das erfindungsgemäße Steuergerät kann für den ersten Kommunikationsstandard und/oder den zweiten Kommunikationsstandard die gleichen Normen einsetzen, wie sie bereits in Bezug auf die erfindungsgemäße Sensoranordnung beschrieben wurden. Entsprechend können sich das von der Sensoranordnung empfangbare Umschaltsignal mit dem vom Steuergerät ausgebbaren Umschaltsignal gleichen.

Gemäß einer weiteren möglichen Ausführungsform kann an der Kommunikationsschnittstelle des Steuergeräts mindestens eine von der Sensoranordnung her führende Datenleitung anschließbar sein. Optional können am Steuergerät mehrere von der Sensoranordnung her führende Datenleitungen anschließbar sein. Entsprechend kann an der Signalschnittstelle der Sensoranordnung mindestens eine zum Steuergerät führende Datenleitung anschließbar sein. Optional können an der Sensoranordnung mehrere zum Steuergerät führende Datenleitungen anschließbar sein.

Ein Automatisierungssystem für technische Anlagen umfassend mindestens eine Sensoranordnung gemäß der vorangegangenen Ausführungsformen und mindestens ein Steuergerät gemäß der vorangegangenen Ausführungsformen löst auch die eingangs zugrunde gelegte Aufgabe, wobei die Signalschnittstelle der mindestens einen Sensoranordnung mit der Kommunikationsschnittstelle des mindestens einen Steuergeräts verbunden ist. Insbesondere können die Signal- und Kommunikationsschnittstelle über eine oder mehrere Datenleitungen verbunden sein.

Durch die bereits genannten Vorteile der erfindungsgemäßen Sensoranordnung und des erfindungsgemäßen Steuergeräts können mit dem erfindungsgemäßen Automatisierungssystem vor allem beim Verbinden der einschlägigen Schnittstellen, beispielsweise bei den Datenleitungen, vorteilhafterweise Kosten, Material und/oder Platz gespart werden, da die Signalübertragung im ersten sowie im zweiten Betriebszustand der Sensoranordnung erfindungsgemäß über ein und dieselbe Schnittstellenverbindung, insbesondere ein und dieselbe Datenleitung, erfolgen kann.

Die eingangs zugrunde gelegte Aufgabe kann auch durch ein Verfahren gemäß Anspruch 12 gelöst werden.

Dieses Verfahren kann in der erfindungsgemäßen Sensoranordnung bzw. im erfindungsgemäßen Automatisierungssystem zum Einsatz kommen, dabei die bereits erwähnten Vorteile herbeiführen und so zur Einsparung von Kosten, Material und/oder Platz beitragen.

Das Verfahren kann insbesondere vom Mikroprozessor bzw. Mikrokontroller der Sensoranordnung vollständig oder zumindest teilweise ausgeführt werden. Alternativ oder zusätzlich kann das Verfahren auch ein computerimplementiertes Verfahren sein. Die vorliegende Erfindung betrifft somit auch ein Computerprogramm, umfassend Befehle, die eine Ausführung des erfindungsgemäßen Verfahrens bewirken. Ferner betrifft die vorliegende Erfindung ein computerlesbares Speichermedium, auf dem ein solches Computerprogramm gespeichert ist.

Jegliche Verweise auf Normen und Standards (z.B. EIA-Normen, IEC-Normen, usw.), aus der vorliegenden Anmeldung beziehen sich jeweils auf die zum Zeitpunkt der Einreichung geltende Fassung der entsprechenden Norm bzw. des entsprechenden Standards.

Im Folgenden ist die Erfindung beispielhaft mit Bezug auf die Zeichnungen näher erläutert. Die bei den gezeigten Ausführungsformen beispielhaft dargestellte Merkmalskombination kann nach Maßgabe der obigen Ausführungen entsprechend der für einen bestimmten Anwendungsfall notwendigen Eigenschaften der erfindungsgemäßen Sensoranordnung, des Steuergeräts und/oder des Automatisierungssystems durch weitere Merkmale ergänzt werden. Auch können, ebenfalls nach Maßgabe der obigen Ausführungen, einzelne Merkmale bei den beschriebenen Ausführungsformen weggelassen werden, wenn es auf die Wirkung dieses Merkmals in einem konkreten Anwendungsfall nicht ankommt. In den Zeichnungen werden für Elemente gleicher Funktion und/oder gleichen Aufbaus stets dieselben Bezugszeichen verwendet.

Es zeigen:
- Fig. 1:: eine schematische Darstellung einer erfindungsgemäßen Sensoranordnung;
- Fig. 2:: eine schematische Darstellung eines erfindungsgemäßen Automatisierungssystems mit einer erfindungsgemäßen Sensoranordnung und einem erfindungsgemäßen Steuergerät; und
- Fig. 3:: eine schematische Darstellung eines Zeitdiagramms mit verschiedenen relevanten Prozessgrößen vor und nach Empfang des Umschaltsignals in der erfindungsgemäßen Sensoranordnung.

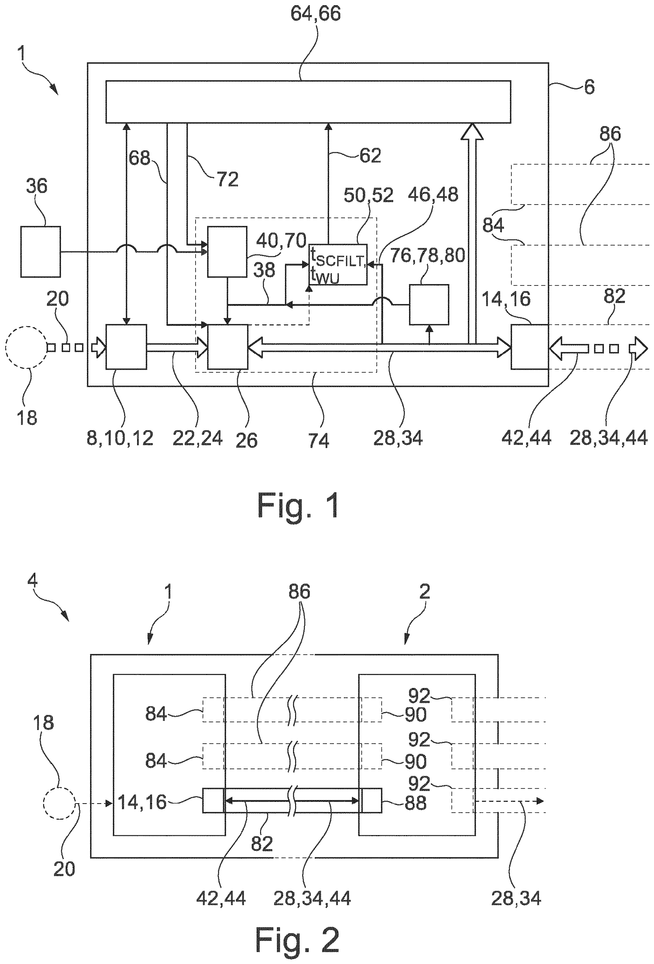

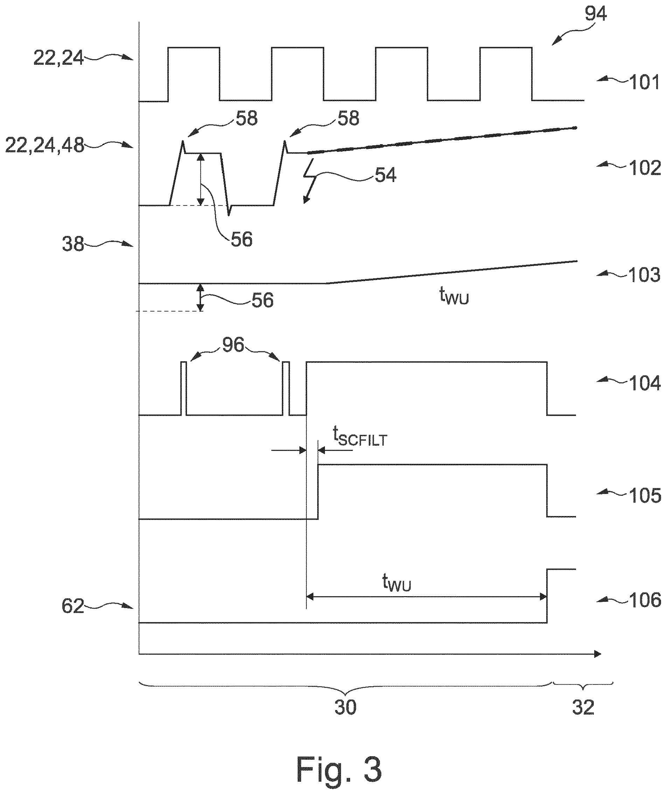

Im Folgenden sind eine erfindungsgemäße Sensoranordnung 1, ein erfindungsgemäßes Steuergerät 2 und ein erfindungsgemäßes Automatisierungssystem 4 mit Bezug auf Fig. 1 bzw. 2 beschrieben. Anschließend wird der Vorgang einer Umschaltung der erfindungsgemäßen Sensoranordnung 1 mit Bezug auf Fig. 3 erläutert.

Fig. 1 zeigt die erfindungsgemäße Sensoranordnung 1 in vereinfachter, schematischer Darstellung. Die Sensoranordnung 1 kann durch ein eigenes Gehäuse 6 abgegrenzt sein und/oder in einem Gehäuse einer der Sensoranordnung 1 übergeordneten Systemeinheit (nicht gezeigt) eingebaut sein.

Die Sensoranordnung 1 umfasst in der dargestellten Ausführungsform einen Sensor 8, insbesondere einen schaltenden Sensor 10, wie zum Beispiel, aber nicht ausschließlich, einen Inkrementaldrehgeber 12, sowie eine Signalschnittstelle 14, insbesondere eine I/O-Schnittstelle 16, zum Übermitteln von Signalen.

Der Sensor 8 ist ausgestaltet, eine in einem Bereich 18 auftretende physikalische Größe 20 zu messen und diese als Messsignal 22 in Form von elektrischen Logikpegeln 24 (siehe auch Fig. 3) auszugeben. In der gezeigten Ausführungsform gibt der Sensor 8 sein Messsignal 22 an ein Leitungstreibergerät 26 der Sensoranordnung 1 aus, welches das Messsignal 22 verstärkt und als Sensorausgangssignal 28 an die Signalschnittstelle 14 ausgibt.

Die Sensoranordnung 1 ist ausgestaltet, in einem ersten Betriebszustand 30 (siehe Fig. 3) über die Signalschnittstelle 14 das Sensorausgangssignal 28 mit elektrischen Logikpegeln 34 (siehe Fig. 3) gemäß einem ersten Kommunikationsstandard auszugeben. Hierfür umfasst die Sensoranordnung 1 ein Spannungsversorgungsgerät 36 zum Speisen des Leitungstreibergeräts 26 mit einer geregelten Versorgungsspannung 38, welche im ersten Betriebszustand an die Logikpegel 34 des ersten Kommunikationsstandards angepasst wird. In der gezeigten beispielhaften Ausführungsform speist das Spannungsversorgungsgerät 36 das Leitungstreibergerät 26 über einen Spannungswandler 40 der Sensoranordnung 1, dessen Funktion weiter unten näher erläutert wird.

Ferner ist die Sensoranordnung 1 ausgestaltet, ein nicht dem ersten Kommunikationsstandard entsprechendes, elektrisches Umschaltsignal 42 (siehe Fig. 1) zu empfangen, wobei die Sensoranordnung 1 abhängig vom Empfang des Umschaltsignals 42 in einen zweiten Betriebszustand 32 (siehe Fig. 3) umschaltbar ausgestaltet ist. Des Weiteren ist die Sensoranordnung 1 ausgestaltet, in diesem zweiten Betriebszustand 32 über die Signalschnittstelle 14 Kommunikationssignale 44 mit Logikpegeln gemäß einem zweiten Kommunikationsstandard zu empfangen, wobei sich die Logikpegel 34 des ersten Kommunikationsstandards von den Logikpegeln des zweiten Kommunikationsstandards unterscheiden.

Ein Erkennen des Umschaltsignals 42 erfolgt anhand einer an der Sensoranordnung 1 anliegenden elektrischen Spannung 46, die nicht den Logikpegeln 34 des ersten Kommunikationsstandards entspricht. Insbesondere kann die Sensoranordnung 1 ausgestaltet sein, das Umschaltsignal 42 anhand einer an der Signalschnittstelle 14 anliegenden elektrischen Spannung 48 zu erkennen. Hierfür kann die Sensoranordnung 1 ausgestaltet sein, das Umschaltsignal 42 anhand einer Messung der an der Signalschnittstelle 14 anliegenden elektrischen Spannung 48 zu erkennen.

In der gezeigten beispielhaften Ausführungsform umfasst die Sendungsanordnung 1 eine Überwachungseinheit 50 zum Überwachen der an der Sensoranordnung 1 anliegenden elektrischen Spannung 46. Die Überwachungseinheit 50 kann als Spannungskomparator 52 und/oder Spannungsmesser ausgeführt sein und die Versorgungsspannung 38 am Ausgang des Spannungswandlers 40 mit der an der Signalschnittstelle 14 anliegenden elektrischen Spannung 48 kontinuierlich vergleichen. Dieser Vergleich kann alternativ auch periodisch erfolgen.

Beim ersten Kommunikationsstandard kann es sich um die Norm EIA-422 handeln. Beim zweiten Kommunikationsstandard kann es sich um die Norm IEC 61131-9 handeln. Das Umschaltsignal 42 kann entsprechend ein sogenannter *"Master Wake-Up"* gemäß der Norm IEC 61131-9 sein. Insbesondere kann das Umschaltsignal 42 eine vom Steuergerät 2 forcierte, elektrische Spannung 54 sein, wie es in Fig. 3 mit einem Blitzsymbol angedeutet ist. Die forcierte elektrische Spannung 54 entspricht hierbei nicht den Logikpegeln 34 aus der Norm EIA-422 und ist vor allem höher als die Logikpegel 34 aus der Norm EIA-422.

Somit kann durch den oben genannten Vergleich in der Überwachungseinheit 50 erkannt werden, wenn die an der Signalschnittstelle 14 anliegende elektrische Spannung 48 die Versorgungsspannung 38 übersteigt. Ein derartiges Übersteigen ist ein Indikator dafür, dass ein elektrisches Signal, welches nicht dem ersten Kommunikationsstandard entspricht, die Signalschnittstelle 14 von außen erreicht hat, weil die Höhe 56 (siehe Fig. 3) der Versorgungsspannung 38 das theoretische Maximum für die sensorseitig erreichbare elektrische Spannung an der Signalschnittstelle 14 darstellt. Insbesondere ist das Übersteigen also ein Indikator für den Empfang des Umschaltsignals 42, da dies das einzige, im ersten Betriebszustand 30 von der Sensoranordnung 1 erwartete, elektrische Signal ist, welches nicht dem ersten Kommunikationsstandard entspricht. In der gezeigten beispielhaften Ausführungsform kann das Übersteigen also als Indikator dafür verstanden werden, dass durch das übergeordnete Steuergerät 2 ein Master Wake-Up als elektrische Spannung 54 forciert wird.

Wie weiter unten in Bezug auf Fig. 3 näher erläutert wird, ist die Überwachungseinheit 50 ausgestaltet, das Umschaltsignal 42 zu erkennen, sobald die an der Signalschnittstelle 14 anliegende elektrische Spannung 48 die Versorgungsspannung 38 für eine vordefinierte Zeitdauer *twu* (siehe Fig. 3) überstiegen hat. Der Wert für die vordefinierte Zeitdauer *twu* kann hierbei beispielsweise dem zweiten Kommunikationsstandard entstammen und in der Überwachungseinheit 50 nichtflüchtig gespeichert sein.

Optional kann die Überwachungseinheit eine Filterfunktion oder eine Filterkomponente mit einer vordefinierten Zeitkonstante *T_{SCFILT}* umfassen, welche kurzzeitige Überspannungsspitzen 58 (siehe Fig. 3), die im Rahmen des ordnungsgemäßen Schaltbetriebs von schaltenden Sensoren üblich sind, herausfiltert. Diese sind in Fig. 3 gezeigt.

Die Zeitkonstante *T_{SCFILT}* ist hierbei derart gewählt, dass die oben genannte vordefinierte Zeitdauer *t_{WU}* nicht überschritten wird. Ferner kann die Überwachungseinheit 50 ausgestaltet sein, die Zeiterfassung der vordefinierte Zeitdauer *t_{WU}* um den Wert der Zeitkonstante *t_{SCFILT}* zu korrigieren. Die Zeitkonstante *t_{SCFILT}* kann hierfür ebenfalls in der Überwachungseinheit 50 nichtflüchtig gespeichert sein.

Aus Redundanzgründen kann die Sensoranordnung 1, insbesondere die Überwachungseinheit 50, zusätzlich ausgestaltet sein, neben der Messung der an der Signalschnittstelle 14 anliegenden elektrischen Spannung 48 auch eine Messung eines Kurzschlussstroms 60 in der Sensoranordnung 1 durchzuführen. Beispielsweise kann die Überwachungseinheit 50 den Kurzschlussstrom 60 am Leitungstreibergerät 26 messen bzw. zumindest ein Vorhandensein des Kurzschlusstroms 60 registrieren.

Die Überwachungseinheit 50 kann ferner so ausgestaltet sein, dass nach dem Erkennen des Umschaltsignals 42 eine Meldung 62 an einen Mikroprozessor 64 bzw. Mikrokontroller 66 der Sensoranordnung 1 ausgegeben wird. Hierdurch kann ein Wechsel vom ersten Betriebszustand 30 in den zweiten Betriebszustand 32 veranlasst werden. Insbesondere kann im zweiten Betriebszustand 32 das Leitungstreibergerät 26 über einen Befehl 68 vom Mikroprozessor 64 bzw. Mikrokontroller 66 hochohmig geschaltet werden.

Der Spannungswandler 40 ist vorzugsweise ein Gleichspannungswandler 70, der ausgestaltet ist, die Versorgungspannung im zweiten Betriebszustand 32 an die Logikpegel des zweiten Kommunikationsstandards anzupassen. Insbesondere kann dies nach dem Erkennen des Umschaltsignals 42 und auf Befehl 72 des Mikroprozessors 64 bzw. Mikrokontrollers 66 erfolgen, sodass die Versorgungspannung 38 des ersten Betriebszustands 30 in die Versorgungsspannung des zweiten Betriebszustands 32 umgewandelt wird.

Der Spannungswandler 40 und/oder die Überwachungseinheit 50 können auf einem Schaltkreis 74 bzw. einer Leiterplatte des Leitungstreibergeräts 26 integriert sein, wie es in Fig. 1 angedeutet ist. Alternativ können Spannungswandler 40 und/oder Überwachungseinheit 50 separate Schaltkreise darstellen.

In der beispielhaft gezeigten Ausführungsform der Fig. 1 umfasst die Sensoranordnung 1 eine Überspannungsschutzeinrichtung 76, welche zwischen der Signalschnittstelle 14 und dem Spannungsversorgungsgerät 36 angeordnet ist. Die Überspannungsschutzeinrichtung 76 kann beispielsweise eine Diode 78, vorzugsweise eine Schottky-Diode 80 sein, deren Sperrrichtung zur Signalschnittstelle 14 und deren Durchlassrichtung zum Spannungswandler 40 oder zum Spannungsversorgungsgerät 36 weisen. Somit kann die Sensoranordnung 1 vor einer durch das elektrische Umschaltsignal 42 hervorgerufenen Überspannung geschützt werden.

Die Sensoranordnung 1 kann ferner ausgestaltet sein, im zweiten Betriebszustand 32 über die Signalschnittstelle 14 Kommunikationssignale 44 mit Logikpegeln gemäß dem zweiten Kommunikationsstandard auszugeben. Für die Dauer einer solchen Ausgabe kann das Leitungstreibergerät 26 zeitweise über den Befehl 68 niederohmig geschaltet werden.

An der Signalschnittstelle 14 der Sensoranordnung 1 kann mindestens eine zum Steuergerät 2 führende Datenleitung 82 anschließbar sein. Die Sensoranordnung 1 kann neben der Signalschnittstelle 14 noch mindestens eine weitere Schnittstelle 84 aufweisen, sodass an der Sensoranordnung 1 mehrere zum Steuergerät 2 führende Datenleitungen 82, 86 anschließbar sind.

In der gezeigten beispielhaften Ausführungsform der Fig. 2 weist das Steuergerät 2 eine Kommunikationsschnittstelle 88 auf, an welcher die von der Sensoranordnung 1 her führende Datenleitung 82 anschließbar ist. Ferner kann das Steuergerät 2 neben der Kommunikationsschnittstelle 88 noch weitere Schnittstellen 90 aufweisen, sodass die von der Sensoranordnung 1 her führenden Datenleitungen 86 auch am Steuergerät 2 anschließbar sind.

Das Steuergerät 2 ist in der gezeigten Ausführungsform entsprechend ausgestaltet, über die Kommunikationsschnittstelle 88 das Sensorausgangssignal 28 mit den elektrischen Logikpegeln 34 gemäß dem ersten Kommunikationsstandard zu empfangen. Das Steuergerät 2 kann je nach Anwendung das empfangene Sensorausgangssignal 28 intern verarbeiten und/oder zwecks Verarbeitung an ein dem Steuergerät 2 übergeordnetes Verarbeitungsgerät (nicht gezeigt) des Automatisierungssystems 4 weiterleiten. Hierfür können ebenfalls entsprechende Schnittstellen 92 am Steuergerät 2 vorgesehen sein.

Ferner ist das Steuergerät 2 ausgestaltet, das nicht dem ersten Kommunikationsstandard entsprechende, elektrische Umschaltsignal 42 auszugeben und nach einer Ausgabe des Umschaltsignals 42 die Kommunikationssignale 44 mit den Logikpegeln gemäß dem zweiten Kommunikationsstandard auszugeben.

In der gezeigten Ausführungsform ist das Steuergerät 2 ausgestaltet, das Umschaltsignal 42 für eine vordefinierte Ausgabezeit lang auszugeben, wobei der Wert für die vordefinierte Ausgabezeit aus dem zweiten Kommunikationsstandard entstammen und mit dem Wert der oben erwähnten vordefinierten Zeitdauer *t_{WU}* übereinstimmen kann.

Optional kann das Steuergerät 2 auch ausgestaltet sein, die Kommunikationssignale 44 mit elektrischen Logikpegeln gemäß dem zweiten Kommunikationsstandard von der Sensoranordnung 1 zu empfangen. Entsprechend kann das Steuergerät 2 ausgestaltet sein, nach der Ausgabe des Umschaltsignals 42 mit einer Ausgabe der Kommunikationssignale 44 so lange zu warten, bis eine Quittierung des Umschaltsignals 42 durch die Sensoranordnung 1 erfolgt. Außerdem kann das Steuergerät 2 ausgestaltet sein, ein erneutes Umschaltsignal auszugeben, falls innerhalb einer vordefinierten Quittierzeit keine Quittierung des vorangegangenen Umschaltsignals 42 erfolgt sein sollte.

Wie in Fig. 2 gezeigt, umfasst das Automatisierungssystem 4 mindestens eine Sensoranordnung 1 und mindestens ein Steuergerät 2, wobei die Signalschnittstelle 14 der mindestens einen Sensoranordnung 1 mit der Kommunikationsschnittstelle 88 des mindestens einen Steuergeräts 2 verbunden ist. In der gezeigten Ausführungsform sind die Signalschnittstelle 14 und Kommunikationsschnittstelle 88 über die Datenleitung 82 verbunden. Die Signalübertragung im ersten Betriebszustand 30 sowie im zweiten Betriebszustand 32 erfolgen hierbei über ein und dieselbe Datenleitung 82.

Das erfindungsgemäße Verfahren zum Umschalten der Betriebszustände der Sensoranordnung 1 wird im Folgenden in Bezug auf das Zeitdiagramm aus Fig. 3 erläutert. Vorab werden die gezeigten Verläufe kurz eingeführt:
Die waagrechte Achse stellt jeweils den Zeitverlauf von links nach rechts dar.

Der oberste Signalverlauf 101 des Zeitdiagramms repräsentiert die Spannungspegel 24 des binären Messsignals 22 aus dem Sensor 8.

Im zweiten Signalverlauf 102 sind die Spannungspegel 34 des im Leitungstreibergerät 26 verstärkten Sensorausgangssignals 28 gezeigt. Dies entspricht gleichzeitig der an der Signalschnittstelle 14 anliegenden Spannung 48.

Der dritte Signalverlauf 103 zeigt den zeitlichen Verlauf der Versorgungsspannung 38.

Der vierte Signalverlauf 104 zeigt den ungefilterten Spannungsvergleich der Überwachungseinheit 50. Ein Hi-Pegel bedeutet hierbei, dass eine Übersteigung der Versorgungspannung 38 vorliegt.

Der vorletzte Signalverlauf 105 zeigt den gefilterten Spannungsvergleich der Überwachungseinheit 50. Ein Hi-Pegel bedeutet hierbei ebenfalls, dass eine Übersteigung der Versorgungspannung 38 vorliegt.

Im untersten Signalverlauf 106 ist der Spannungspegel der Meldung 62 an den Mikroprozessor 64 bzw. Mikrokontroller 66 dargestellt. Ein Hi-Pegel bedeutet hierbei, dass das Umschaltsignal 42 erkannt wurde.

Das Blitzsymbol in dem zweiten Signalverlauf 102 markiert das erstmalige Auftreten des Umschaltsignals 42. Die Sensoranordnung 1 befindet sich hierbei im ersten Betriebszustand 30 und die Signalschnittstelle 14 der Sensoranordnung 1 fungiert bis zu diesem Zeitpunkt als reine Ausgabeschnittstelle. Das Messsignal 22 wird vom Sensor 8, beispielsweise als Rechteckspannung 94, ausgegeben und im Leitungstreibergerät 26 auf das Sensorausgangssignal 28 verstärkt.

Bis auf kurzzeitige Überspannungsspitzen 58, deren Dauer die Zeitkonstante *t_{SCFILT}* nicht überschreiten, geschieht keine Übersteigung der Versorgungsspannung 38. Die Überspannungsspitzen 58 führen zwar im ungefilterten Spannungsvergleich zu kurzzeitigen Ausschlägen 96, werden jedoch aufgrund der Filterfunktion der Überwachungseinheit 50 unterdrückt und somit von der Überwachungseinheit 50 nicht berücksichtigt (siehe vorletzten Signalverlauf 105 in Fig. 3).

Sobald das Umschaltsignal 42 auftritt, wirkt es sich auf die an der Signalschnittstelle 14 anliegende Spannung 48 aus und führt insbesondere zu ihrem stetigen Anstieg (siehe zweiten Signalverlauf 102 in Fig. 3).

Mit Ansprechen der Überspannungsschutzeinrichtung 76 steigt in der gezeigten beispielhaften Ausführungsform auch die Versorgungspannung 38 mit gleicher Steigung und einer leichten Verzögerung an (siehe den dritten Signalverlauf 103 in Fig. 3). Aufgrund der leichten Verzögerung übersteigt die an der Signalschnittstelle 14 anliegende Spannung 48 die Versorgungspannung 38 fortan.

Sobald diese Übersteigung der Versorgungsspannung 38 länger als die Zeitkonstante *t_{SCFILT}* andauert, wird sie von der Überwachungseinheit 50 verzeichnet (siehe fünften Signalverlauf 105 in Fig. 3).

Nachdem die Übersteigung der Versorgungsspannung 38 länger als die vordefinierte Zeitdauer *twu* abzüglich der Zeitkonstante *t_{SCFILT}* vorliegt, gibt die Überwachungseinheit 50 die Meldung 62 als Hi-Pegel an den Mikroprozessor 64 bzw. Mikrokontroller 66 aus.

Hiernach erfolgt die Umschaltung aus dem ersten Betriebszustand 30 in den zweiten Betriebszustand 32. Das Empfangen und/oder Ausgeben der Kommunikationssignale 44 durch die Sensoranordnung 1 kann beginnen.

## Patentansprüche

1. Sensoranordnung (1) mit einem Sensor (8) und einer Signalschnittstelle (14),
wobei die Sensoranordnung (1) ausgestaltet ist, in einem ersten Betriebszustand (30) über die Signalschnittstelle (14) Sensorausgangssignale (28) des Sensors (8) mit elektrischen Logikpegeln (34) gemäß einem ersten Kommunikationsstandard auszugeben und ein nicht dem ersten Kommunikationsstandard entsprechendes, elektrisches Umschaltsignal (42) zu empfangen,
wobei die Sensoranordnung (1) abhängig vom Empfang des Umschaltsignals (42) in einen zweiten Betriebszustand (32) umschaltbar ausgestaltet ist,
wobei die Sensoranordnung (1) ausgestaltet ist, im zweiten Betriebszustand (32) über die Signalschnittstelle (14) Kommunikationssignale (44) mit Logikpegeln gemäß einem zweiten Kommunikationsstandard zu empfangen,
wobei sich die Logikpegel (34) des ersten Kommunikationsstandards von den Logikpegeln des zweiten Kommunikationsstandards unterscheiden, und
wobei die Sensoranordnung (1) ausgestaltet ist, das Umschaltsignal (42) anhand einer an der Sensoranordnung (1) anliegenden elektrischen Spannung (46, 48) zu erkennen, die nicht den Logikpegeln (34) des ersten Kommunikationsstandards entspricht, wobei die Sensoranordnung (1) ein Leitungstreibergerät (26) zur Verstärkung der Sensorausgangssignale (28),
einen Spannungswandler (40) zum Speisen des Leitungstreibergeräts (26) mit einer Versorgungsspannung (38) und
eine Überwachungseinheit (50), zum Überwachen der an der Sensoranordnung (1) anliegenden elektrischen Spannung (46, 48) umfasst, und
wobei die Überwachungseinheit (50) ausgestaltet ist, die Versorgungsspannung (38) mit der an der Sensoranordnung (1) anliegenden elektrischen Spannung (46, 48) zu vergleichen,
wobei die Überwachungseinheit (50) ausgestaltet ist, das Umschaltsignal (42) zu erkennen, sobald die an der Signalschnittstelle (14) anliegende elektrische Spannung (46, 48) die Versorgungsspannung (38) für eine vordefinierte Zeitdauer t*_{wu}* überstiegen hat.

2. Sensoranordnung (1) nach Anspruch 1, wobei die Überwachungseinheit (50) in einem Schaltkreis (74) des Leitungstreibergeräts (26) integriert ist.

3. Sensoranordnung (1) nach Anspruch 1 oder 2, wobei der Spannungswandler (40) ausgestaltet ist, die Versorgungsspannung (38) abhängig vom Betriebszustand (30, 32) einzustellen.

4. Sensoranordnung (1) nach einem der Ansprüche 1 bis 3, wobei die Sensoranordnung (1) als Überspannungsschutzeinrichtung (76) eine Diode (78) umfasst, welche zwischen der Signalschnittstelle (14) und dem Spannungswandler (40) angeordnet ist.

5. Sensoranordnung (1) nach Anspruch 4, wobei die Diode (78) als Schottky-Diode (80) ausgebildet ist, deren Sperrrichtung zur Signalschnittstelle (14) und deren Durchlassrichtung zum Spannungswandler (40) weisen.

6. Sensoranordnung (1) nach einem der Ansprüche 1 bis 5, wobei der Sensor (8) ein Inkrementalgeber und/oder ein Drehgeber ist.

7. Steuergerät (2) für eine Sensoranordnung (1), wobei das Steuergerät (2) eine Kommunikationsschnittstelle (88) aufweist, wobei das Steuergerät (2) ausgestaltet ist, über die Kommunikationsschnittstelle (88) Sensorausgangssignale (28) mit elektrischen Logikpegeln (34) gemäß einem ersten Kommunikationsstandard zu empfangen, ein nicht dem ersten Kommunikationsstandard entsprechendes, elektrisches Umschaltsignal (42) auszugeben und nach einer Ausgabe des Umschaltsignals (42) Kommunikationssignale (44) mit elektrischen Logikpegeln gemäß einem zweiten Kommunikationsstandard auszugeben, wobei sich die Logikpegel (34) des ersten Kommunikationsstandards von den Logikpegeln des zweiten Kommunikationsstandards unterscheiden, wobei das Steuergerät (2) dazu ausgebildet ist,
• das Umschaltsignal (42) für eine vordefinierte Ausgabezeit lang auszugeben, wobei der Wert für die vordefinierte Ausgabezeit aus dem zweiten Kommunikationsstandard entstammt und mit dem Wert einer vordefinierten Zeitdauer t*_{wu}* übereinstimmt und/oder
• nach der Ausgabe des Umschaltsignals (42) für eine vordefinierte Wartezeit zu warten, bevor die Ausgabe der Kommunikationssignale (44) erfolgt, wobei der Wert für die vordefinierte Wartezeit aus dem zweiten Kommunikationsstandard entstammt.

8. Sensoranordnung (1) nach einem der Ansprüche 1 bis 6 und/oder Steuergerät (2) nach Anspruch 7, wobei der elektrische Logikpegel des ersten Kommunikationsstandards Werte zwischen 0V und 5V +/- 0,4 V oder zwischen 0V und 3,3V +/- 0,4 V annehmen.

9. Sensoranordnung (1) nach einem der Ansprüche 1 bis 6 und/oder Steuergerät (2) nach Anspruch 7 wobei der elektrische Logikpegel des zweiten Kommunikationsstandards die Form eines IO-Link-Signals annimmt.

10. Sensoranordnung (1) nach einem der Ansprüche 1 bis 6 und/oder Steuergerät (2) nach Anspruch 7, wobei der elektrische Logikpegel des zweiten Kommunikationsstandards einen Schwellenwert von 8V aufweist, unter welchem alle Signale als Lo-Pegel aufgefasst werden.

11. Automatisierungssystem (4) für eine technische Anlage, umfassend mindestens eine Sensoranordnung (1) nach einem der Ansprüche 1 bis 6 oder nach Anspruch 8 und mindestens ein Steuergerät (2) nach Anspruch 7, wobei die Signalschnittstelle (14) der mindestens einen Sensoranordnung (1) mit der Kommunikationsschnittstelle (88) des mindestens einen Steuergeräts (2) verbunden ist.

12. Verfahren zum Umschalten von Betriebszuständen (30, 32) einer Sensoranordnung (1) auf ein Umschaltsignal (42) hin, mindestens aus einem ersten Betriebszustand (30), in dem Sensorausgangssignale (28) der Sensoranordnung (1) mit elektrischen Logikpegeln (34) gemäß einem ersten Kommunikationsstandard von der Sensoranordnung (1) ausgegeben werden, in einen zweiten Betriebszustand (32), in dem Kommunikationssignale (44) mit elektrischen Logikpegeln gemäß einem zweiten Kommunikationsstandard von der Sensoranordnung (1) empfangen werden, wobei sich die Logikpegel (34) des ersten Kommunikationsstandards von den Logikpegeln des zweiten Kommunikationsstandards unterscheiden, und wobei aus dem ersten Betriebszustand (30) in den zweiten Betriebszustand (32) automatisch umgeschaltet wird, wenn das Umschaltsignal (42) anhand einer an der Sensoranordnung (1) anliegenden elektrischen Spannung (46, 48), die nicht den Logikpegeln (34) des ersten Kommunikationsstandards entspricht, erkannt worden ist, wobei die Sensorausgangssignale (28) durch ein Leitungstreibergerät (26), das die Sensoranordnung (1) umfasst, verstärkt werden, wobei
ein Spannungswandler (40) das Leitungstreibergerät (26) mit einer Versorgungsspannung (38) speist, und wobei das Umschaltsignal (42) erkannt wird, sobald die an der Signalschnittstelle (14) anliegende elektrische Spannung (46, 48) die Versorgungsspannung (38) für eine vordefinierte Zeitdauer t*_{wu}* überstiegen hat.

## Claims

1. A sensor arrangement (1) comprising a sensor (8) and a signal interface (14),
wherein the sensor arrangement (1) is designed, in a first operating state (30), to output sensor output signals (28) of the sensor (8) with electrical logic levels via the signal interface (14) according to a first communication standard and receive an electrical switching signal (42) which does not correspond to the first communication standard,
wherein the sensor arrangement (1) is designed to be switchable into a second operating state (32) as a function of the reception of the switching signal (42),
wherein the sensor arrangement (1) is designed, in the second operating state (32), to receive communication signals (44) with logic levels via the signal interface (14) according to a second communication standard,
wherein the logic levels (34) of the first communication standard differ from the logic levels of the second communication standard, and
wherein the sensor arrangement (1) is designed to identify the switching signal (42) on the basis of a voltage (46, 48) that is applied to the sensor arrangement (1) and does not correspond to the logic levels (34) of the first communication standard, wherein the sensor arrangement (1) comprises a line driver device (26) for amplifying the sensor output signals (28),
a voltage converter (40) for supplying the line driver device (26) with supply voltage (38) and
a monitoring unit (50) for monitoring the voltage (46, 48) applied to the sensor arrangement (1), and
wherein the monitoring unit (50) is designed to compare the supply voltage (38) with the voltage (46, 48) applied to the sensor arrangement (1),
wherein the monitoring unit (50) is designed to identify the switching signal (42) as soon as the voltage (46, 48) applied to the signal interface (14) has exceeded the supply voltage for a predetermined period of time t*_{wu}*.

2. The sensor arrangement according to claim 1, wherein the monitoring unit (50) is integrated in a circuit (74) of the line driver device (26).

3. The sensor arrangement according to claim 1 or 2, wherein the voltage converter (40) is designed to adjust the supply voltage (38) as a function of the operating state (30, 32).

4. The sensor arrangement (1) according to one of claims 1 to 3, wherein the sensor arrangement (1) comprises a diode (78) as an overvoltage protective device (76), which is arranged between the signal interface (14) and the voltage converter (40).

5. The sensor arrangement (1) according to claim 4, wherein the diode (78) is a Schottky diode (80), the reverse direction of which is directed toward the signal interface (14) and the forward direction of which is directed toward the voltage converter (40).

6. The sensor arrangement (1) according to one of claims 1 to 5, wherein the sensor (8) is an incremental encoder and/or a rotary encoder.

7. A control device (2) for a sensor arrangement (1), wherein the control device (2) has a communication interface (88), wherein the control device (2) is designed to receive sensor output signals (28) with electrical logic levels (34) via the communication interface (99) according to a first communication standard, to output a switching signal that does not correspond to the first communication standard, and, after outputting the switching signal (42), to output communication signals (44) with electrical logic levels according to a second communication standard, wherein the logic levels (34) of the first communication standard differ from the logic levels of the second communication standard, wherein the control device (2) is designed
• to output the switching signal (42) for a predetermined output time, wherein the value for the predetermined output time originates from the second communication standard and matches the value of a predetermined period of time t*_{wu}* and/or,
• after outputting the switching signal (42), to wait for a predetermined wait time before the communication signals (44) are output, wherein the value for the predetermined wait time originates from the second communication standard.

8. The sensor arrangement (1) according to one of claims 1 to 6 and/or the control device (2) according to claim 7, wherein the electrical logic levels of the first communication standard take on values between 0V and 5V +/- 0.4 V or between 0V and 3.3V +/-0.4 V.

9. The sensor arrangement (1) according to one of claims 1 to 6 and/or the control device (2) according to claim 7, wherein the electrical logic level of the second communication standard takes on the form of an IO-Link signal.

10. The sensor arrangement (1) according to one of claims 1 to 6 and/or the control device (2) according to claim 7, wherein the electrical logic level of the second communication standard has a threshold value of 8V under which all signals are considered Lo-levels.

11. An automated system (4) for technical equipment, comprising at least one sensor arrangement (1) according to one of claims 1 to 6 or according to claim 8 and at least one control device (2) according to claim 7, wherein the signal interface (14) of the at least one sensor arrangement (1) is connected to the communication interface (88) of the at least one control device (2).

12. A method for switching operating states (30, 32) of a sensor arrangement (1) in response to a switching signal (42), at least from one first operating state (30), in which sensor output signals (28) of the sensor arrangement (1) with electrical logic levels (34) are output from the sensor arrangement (1) according to a first communication standard, into a second operating state (32), in which communication signals (44) with electrical logic levels are received from the sensor arrangement (1) according to a second communication standard, wherein the logic levels (34) of the first communication standard differ from the logic levels of the second communication standard, and wherein switching from the first operating state (30) into the second operating states (32) occurs automatically if the switching signal (42) has been identified on the basis of a voltage (46, 48) that is applied to the sensor arrangement (1) and does not correspond to the logic levels (34) of the first communication standard, wherein the sensor output signals (28) are strengthened by a line driver device (26) that comprises the sensor arrangement (1), wherein
a voltage converter (40) supplies the line driver device (26) with a supply voltage (38), and wherein the switching signal (42) is identified as soon as the voltage (46, 48) applied to the signal interface has exceeded the supply voltage (38) for a predetermined period of time t*_{wu}*.

## Revendications

1. Agencement de détecteurs (1) doté d'un détecteur (8) et d'une interface de signaux (14),
l'agencement de détecteurs (1) étant conçu pour émettre, dans un premier état de fonctionnement (30), par l'intermédiaire de l'interface de signaux (14), des signaux de sortie de détecteur (28) du détecteur (8) avec des niveaux logiques électriques (34) selon un premier standard de communication et pour recevoir un signal de commutation électrique (42) ne correspondant pas au premier standard de communication,
l'agencement de détecteurs (1) étant conçu de manière à pouvoir être commuté dans un second état de fonctionnement (32) en fonction de la réception du signal de commutation (42),
l'agencement de détecteurs (1) étant conçu pour recevoir, dans le second état de fonctionnement (32), par l'intermédiaire de l'interface de signaux (14), des signaux de communication (44) avec des niveaux logiques selon un second standard de communication,
les niveaux logiques (34) du premier standard de communication étant différents des niveaux logiques du second standard de communication, et
l'agencement de détecteurs (1) étant conçu pour reconnaître le signal de commutation (42) à l'aide d'une tension électrique (46, 48) appliquée à l'agencement de détecteurs (1), qui ne correspond pas aux niveaux logiques (34) du premier standard de communication,
l'agencement de détecteurs (1) comprenant un appareil de pilotage de ligne (26) pour amplifier les signaux de sortie de détecteur (28),
un convertisseur de tension (40) pour alimenter l'appareil de pilotage de ligne (26) avec une tension d'alimentation (38) et
une unité de surveillance (50) pour surveiller la tension électrique (46, 48) appliquée à l'agencement de détecteurs (1), et
l'unité de surveillance (50) étant conçue pour comparer la tension d'alimentation (38) avec la tension électrique (46, 48) appliquée à l'agencement de détecteurs (1),
l'unité de surveillance (50) étant conçue pour reconnaître le signal de commutation (42) dès que la tension électrique (46, 48) appliquée à l'interface de signaux (14) a dépassé la tension d'alimentation (38) pendant une durée prédéfinie t*_{wu}*.

2. Agencement de détecteurs (1) selon la revendication 1, l'unité de surveillance (50) étant intégrée dans un circuit de commutation (74) de l'appareil de pilotage de ligne (26).

3. Agencement de détecteurs (1) selon la revendication 1 ou 2, le convertisseur de tension (40) étant conçu pour régler la tension d'alimentation (38) en fonction de l'état de fonctionnement (30, 32).

4. Agencement de détecteurs (1) selon l'une des revendications 1 à 3, l'agencement de détecteurs (1) comprenant, comme dispositif de protection contre les surtensions (76), une diode (78) qui est disposée entre l'interface de signaux (14) et le convertisseur de tension (40).

5. Agencement de détecteurs (1) selon la revendication 4, la diode (78) se présentant sous la forme d'une diode Schottky (80) dont le sens de blocage est dirigé vers l'interface de signaux (14) et dont le sens de passage est dirigé vers le convertisseur de tension (40).

6. Agencement de détecteurs (1) selon l'une des revendications 1 à 5, le détecteur (8) étant un codeur incrémental et/ou un codeur.

7. Appareil de commande (2) pour un agencement de détecteurs (1), l'appareil de commande (2) présentant une interface de communication (88), l'appareil de commande (2) étant conçu pour recevoir, par l'intermédiaire de l'interface de communication (88), des signaux de sortie de détecteur (28) avec des niveaux logiques électriques (34) selon un premier standard de communication, pour émettre un signal de commutation électrique (28) ne correspondant pas au premier standard de communication et pour émettre, après l'émission du signal de commutation (42), des signaux de communication (44) avec des niveaux logiques électriques selon un second standard de communication, les niveaux logiques (34) du premier standard de communication étant différents des niveaux logiques du second standard de communication, l'appareil de commande (2) étant conçu
• pour émettre le signal de commutation (42) pendant une durée de sortie prédéfinie, la valeur pour la durée de sortie prédéfinie étant issue du second standard de communication et coïncidant avec la valeur d'une durée prédéfinie t*_{wu}* et/ou
• pour attendre pendant un temps d'attente prédéfini après l'émission du signal de commutation (42) avant d'émettre les signaux de communication (44), la valeur du temps d'attente prédéfini étant issue du second standard de communication.

8. Agencement de détecteurs (1) selon l'une des revendications 1 à 6 et/ou appareil de commande (2) selon la revendication 7, le niveau logique électrique du premier standard de communication adoptant des valeurs comprises entre 0 V et 5 V +/- 0,4 V ou entre 0 V et 3,3 V +/- 0,4 V.

9. Agencement de détecteurs (1) selon l'une des revendications 1 à 6 et/ou appareil de commande (2) selon la revendication 7, le niveau logique électrique du second standard de communication prenant la forme d'un signal IO-Link.

10. Agencement de détecteurs (1) selon l'une des revendications 1 à 6 et/ou appareil de commande (2) selon la revendication 7, le niveau logique électrique du second standard de communication présentant une valeur seuil de 8 V en dessous de laquelle tous les signaux sont considérés comme des niveaux Lo.

11. Système d'automatisation (4) pour une installation technique, comprenant au moins un agencement de détecteurs (1) selon l'une des revendications 1 à 6 ou selon la revendication 8 et au moins un appareil de commande (2) selon la revendication 7, l'interface de signaux (14) du au moins un agencement de détecteurs (1) étant raccordée à l'interface de communication (88) du au moins un appareil de commande (2).

12. Procédé de commutation d'états de fonctionnement (30, 32) d'un agencement de détecteurs (1) en réponse à un signal de commutation (42), au moins à partir d'un premier état de fonctionnement (30), dans lequel des signaux de sortie de détecteur (28) de l'agencement de détecteurs (1) sont émis par l'agencement de détecteurs (1) avec des niveaux logiques électriques (34) selon un premier standard de communication, vers un second état de fonctionnement (32), dans lequel des signaux de communication (44) avec des niveaux logiques électriques selon un second standard de communication sont reçus par l'agencement de détecteurs (1), les niveaux logiques (34) du premier standard de communication étant différents des niveaux logiques du second standard de communication, et la commutation du premier état de fonctionnement (30) au second état de fonctionnement (32) s'effectuant automatiquement lorsque le signal de commutation (42) a été détecté à l'aide d'une tension électrique (46, 48) appliquée à l'agencement de détecteurs (1) qui ne correspond pas aux niveaux logiques (34) du premier standard de communication, les signaux de sortie de détecteur (28) étant amplifiés par un appareil de pilotage de ligne (26) qui comprend l'agencement de détecteurs (1),
un convertisseur de tension (40) alimentant l'appareil de pilotage de ligne (26) avec une tension d'alimentation (38), et le signal de commutation (42) étant reconnu dès que la tension électrique (46, 48) appliquée à l'interface de signaux (14) a dépassé la tension d'alimentation (38) pendant une durée prédéfinie t*_{wu}*.
